# EUROPÄISCHE PATENTANMELDUNG

(11) **EP 1 264 803 A2**
(43) Veröffentlichungstag der Anmeldung: **11.12.2002**
(21) Anmeldenummer: 02012099.4
(22) Anmeldetag: 31.05.2002
(51) Int. Cl.: C03B 33/07, C03B 33/03

(54) **Verfahren und Vorrichtung zum Aufteilen von Verbundglastafeln**

(30) Priorität: 05.06.2001 DE 10127248
(71) Anmelder: HEGLA Fahrzeug- u. Maschinenbau GmbH & Co. KG, D-37688 Beverungen (DE)
(72) Erfinder: Glaser, Siegfried, Dipl.-Ing., 37688 Beverungen (DE)
(74) Vertreter: Solf, Alexander, Dr.

(57) **Zusammenfassung**

Die Erfindung betrifft ein Verfahren zum Schneiden von Verbundglasscheiben, wobei die Verbundglasscheiben während eines oder mehrerer Bearbeitungsschritte mit Klemmbalken klemmend gehalten werden, wobei Klemmbalken nur im Bereich einer zu klemmenden Verbundglasscheibe mit einer Klemmkraft beaufschlagt werden, so daß über die Scheibe überstehende Teile des Klemmbalkens keine Spannungsstützen insbesondere in die Kantenbereiche der Glastafel einbringen, sowie eine Vorrichtung zum Durchführen des Verfahrens.

## Beschreibung

Die Erfindung betrifft ein Verfahren zum Aufteilen von Verbundglastafeln nach dem Oberbegriff des Anspruchs 1. Die Erfindung betrifft zudem eine Vorrichtung zum Aufteilen von Verbundglastafeln nach dem Oberbegriff des Anspruchs 6.

In einer bekannten Verbundglasschneidanlage, in der eine horizontal auf einem Auflagetisch gelagerte Verbundglasrohtafel aufgeteilt wird, wird die Verbundglasrohtafel gegenüberliegend unten und oben gleichzeitig geritzt bzw. geschnitten, an einer oberen und unteren Brechleiste positioniert und mit balkenförmigen, sich parallel zur Ritzlinie erstreckenden, an ihren Enden mit Kraftmitteln beaufschlagten Niederhaltern im Bereich der Ritzlinie geklemmt. Danach wird der untere Ritz bzw. Schnitt durch Anheben der unteren Brechleiste und anschließend der obere Schnitt durch Absenken der oberen Brechleiste gebrochen. In der Folge wird dann die noch über die Verbundfolie zusammenhängende und von den Niederhaltern geklemmte Verbundglastafel zwischen Heizstrahlern positioniert, die die Folie im Bereich der Bruchkanten erwärmen. Nach der plastifizierenden Erwärmung werden die durch den Bruch entstandenen Verbundglasteile der Tafel mit den Niederhaltern auseinandergezogen, wobei die plastifizierte Folie getrennt wird.

Andere Verbundglasschneidanlagen arbeiten mit schwenkbaren Wärmequellen und brechen durch Verschwenken von Verbundglastafelauflagern.

Für das Auseinanderziehen der durch Ritzen und Brechen aufgeteilten Verbundglasteile müssen letztere mit relativ hohen Kräften mit den Niederhalterbalken niedergehalten werden, damit sie während des Auseinanderziehens nicht verrutschen. Es bleibt dabei nicht aus, daß Verbundglasscheiben zerdrückt werden. Häufig ist dies der Fall, wenn Verbundglasteile niedergehalten werden, die nicht die gesamte Breite des Auflagetisches einnehmen, wobei meist Kantenbruch auftritt.

Zweck der Erfindung ist, ein Zerdrücken der Verbundglasteile beim Aufteilen zu vermeiden.

Aufgabe der Erfindung ist, die Klemmkräfte der Niederhalterbalken derart zu beeinflussen, daß ein Zerdrücken von Verbundglasteilen ausgeschlossen werden kann.

Diese Aufgabe wird durch die Merkmale des Anspruchs 1 und 6 gelöst. Vorteilhafte Weiterbildungen der Erfindung werden in den von diesen Ansprüchen abhängigen Unteransprüchen gekennzeichnet.

Anhand der Zeichnung wird die Erfindung im folgenden beispielhaft näher erläutert. Es zeigen:
- Fig. 1: schematisch eine Draufsicht auf eine erfindungsgemäße Verbundglasschneidanlage;

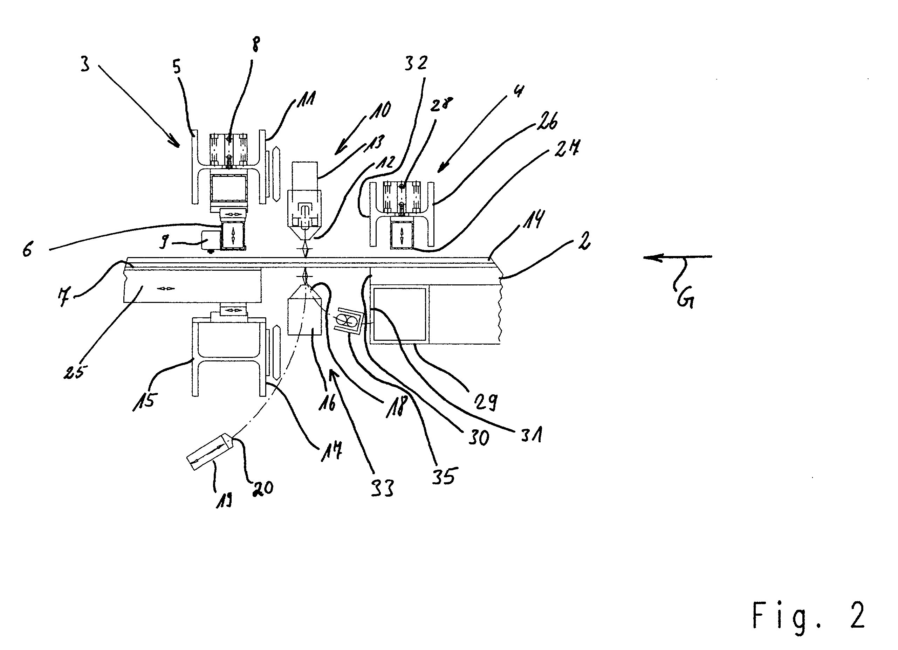

- Fig. 2: schematisch eine Seitenansicht der erfindungsgemäßen Verbundglasschneidanlage;

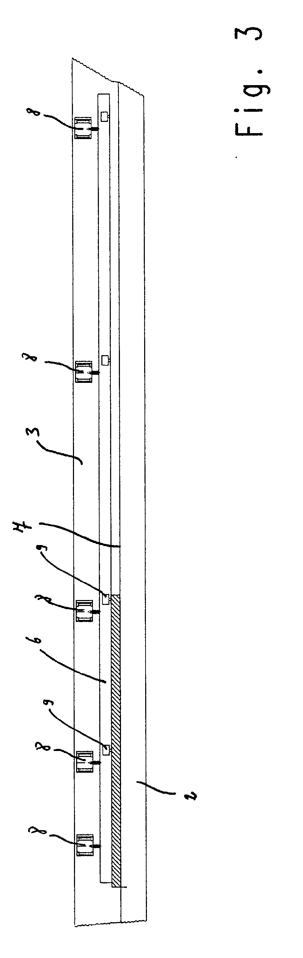

- Fig. 3: schematisch eine Frontansicht der erfindungsgemäßen Verbundglasschneidanlage im Arbeitsbereich der Schneidvorrichtung;

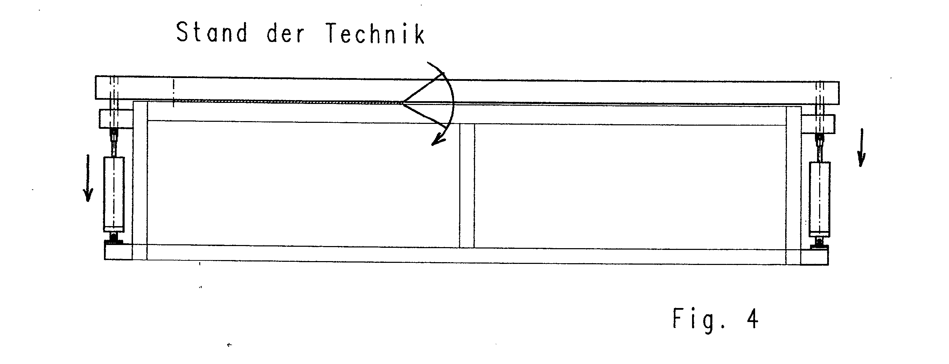

- Fig. 4: schematisch eine Frontansicht einer bekannten Verbundglasschneidanlage im Arbeitsbereich der Schneidvorrichtung (Stand der Technik);

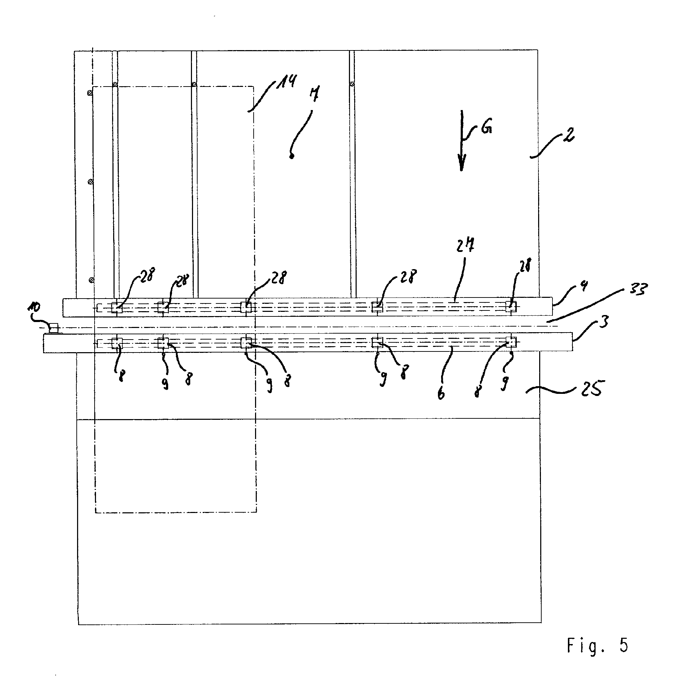

- Fig. 5: eine Draufsicht entsprechend Fig. 1 mit einer schmaleren aufgelegten Verbundglasscheibe.

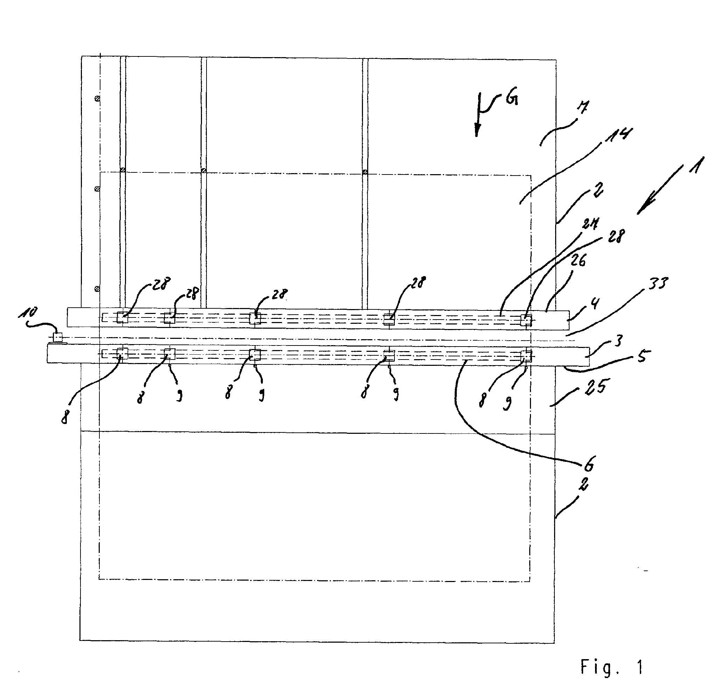

Eine erfindungsgemäße Verbundglasschneidanlage 1 (Fig. 1) besitzt einen Bearbeitungstisch 2, eine Schneidbrücke 3 und einen Niederhalter 4.

Die Schneidbrücke 3 und der Niederhalter 4 überspannen den Bearbeitungstisch 2 quer zur Glasförderrichtung G und sind parallel und zueinander beabstandet angeordnet.

Die Schneidbrücke 3 wird aus einem Brückenträger 5 ausgebildet, welcher unterseitig einen oder mehrere Klemmbalken 6 besitzt. Der oder die Klemmbalken 6 sind vertikal verschieblich auf die Oberfläche 7 des Bearbeitungstisches 2 bewegbar insbesondere absenkbar angeordnet. Zur absenkenden oder anhebenden Betätigung der oder des Klemmbalkens 6 sind am Brückenträger bzw. zwischen Brückenträger 5 und Klemmbalken 6 Kolbenzylindereinheiten 8 angeordnet. Die Kolbeinzylindereinheiten 8 sind beispielsweise über die Länge des Brückenträgers gleich verteilt angeordnet oder besitzen unterschiedliche Abstände zueinander. Die Größe und Anzahl der Zylinder ist von der gewünschten zu erzielenden Klemmkraft abhängig.

An den Kolbenzylindereinheiten 8 sind Sensoren 9 angeordnet, welche die Kolbenzylindereinheiten 8 aktivieren. Die Sensoren 9 sind Lichtsensoren, Tastsensoren oder andere bekannte Sensoren, welche feststellen können, ob sich im Meßfeld eine Glastafel befindet oder nicht.

Die Schneidbrücke 3 besitzt eine Schneid-/Brecheinrichtung 10, welche entlang der Längserstreckung der Schneidbrücke 3 an einer dem Niederhalter 4 zugewandten Längsseite 11 über die gesamte Breite des Bearbeitungstisches 2 verfahrbar ist. Die Schneid-/Brecheinrichtung 10 besitzt einen auf eine Glastafel 14 absenkbaren Schneidkopf 12 zum oberseitigen Anritzen der Glastafel 14 sowie eine absenkbare Brechrolle 13. Unterseitig einer Ebene der Glastafel 14 des Bearbeitungstisches 2 ist ein zweiter Brückenträger 15 angeordnet, welcher mit dem ersten Brückenträger 5 fluchtet. Mit der Verfahrbahn des Schneidkopfes 12 fluchtend ist am zweiten Brückenträger 15 eine zweite untere Schneideinrichtung 16 angeordnet, welche entlang einer Längsseite 17 über die gesamte Breite des Bearbeitungstisches 2 verfahrbar ist. Die Schneideinrichtung 16 besitzt einen Schneidkopf 18. Ferner ist am zweiten, unteren Brückenträger 15 eine Brechleiste 19 vorhanden, welche absenkbar oder schwenkbar derart angeordnet ist, daß sie mit einer Brechkante 20 von unten an eine durch den Schneidkopf 18 bzw. Schneidkopf 12 erzeugte Ritzlinie einer Glastafel 14 auf diese Druck ausübend bewegbar ist.

An dem Brückenträger 15 ist zudem ein in Glasförderrichtung G, also quer zur Schneidrichtung, bewegliches bzw. verschiebliches Tischsegment 25 des Bearbeitungstisches 2 angeordnet, welches schnitt- bzw. schneidkopfseitig im Ruhezustand in etwa mit den Längsseiten 11, 17 abschließt und von diesen von den Schneideinrichtungen 10, 16 weg entlang der Glasebene bzw. entlang der Glasförderrichtung G verfahrbar ist.

Der Niederhalter 4 wird aus einem Niederhalterträger 26 und darunter zu Bearbeitungstisch 2 hin angeordneten Klemmbalken 27 ausgebildet. Der oder die Klemmbalken 27 sind vertikal verschieblich auf die Oberfläche 7 des Bearbeitungstisches 2 bewegbar. Zur Betätigung des oder der Klemmbalken 27 sind in gleicher Weise wie an der Schneidbrücke 3 Kolbenzylindereinheiten 28 angeordnet.

Unterhalb des Niederhalters 4 befindet sich der Bearbeitungstisch 2, wobei der Bearbeitungstisch 2 unterseitig einen Widerlagerträger 29 für den Niederhalter 4 besitzt. Der Bearbeitungstisch 2 weist eine Stirnfläche 30 auf, die zur Schneidbrücke 3 hinweist und bezüglich der Glasförderrichtung G quer verläuft sowie mit einer Längswandung 31 des Niederlagerträgers 29 und Längswandung 32 des Niederhalterträgers 26 fluchtet bzw. abfließt. Zwischen den Längswandungen 31, 32 sowie 11, 17 besteht ein Abstand 33 bzw. Freiraum 33 zum Einschwenken der Brechleiste 19 bzw. Verfahren des Schneidkopfes 18.

Am Bearbeitungstisch 2 bzw. am Widerlagerträger 29 ist ein in den Freiraum 33 schwenkbarer Heizstrahler 34 angeordnet, welcher sich über die gesamte Breite des Bearbeitungstisches erstreckt und derart angeordnet ist, daß er nach dem Schneiden der Schneidköpfe 12, 18 den angeritzten Bereich aufheizt.

Im folgenden wird die Funktionsweise der erfindungsgemäßen Vorrichtung erläutert:

Eine zu schneidende Glastafel 14 wird entlang der Glasförderrichtung G über den Bearbeitungstisch 2 bewegt, bis sie zwischen dem Niederhalter 4 und dem Niederhalterwiderlagerträger 29 hindurch zwischen die Schneidbrückenträger auf das verschiebliche Tischsegment 25 gelangt. Die Glastafel wird solange gefördert, bis eine geplante Schnittlinie mit den Schneidlinien der Schneidköpfe 12, 18 fluchtet. Die Sensoren 9 erfassen hierbei, ob im Bereich ihrer zugehörigen Kolbenzylindereinheit die Glastafel vorhanden ist oder nicht. Im Bereich der Glastafel 14 werden die Kolbenzylindereinheiten 8 der Schneidbrücke 3 sowie 28 des Niederhalters 4 durch die Sensoren 9 freigeschaltet und anschließend derart betätigt, daß der bzw. die Klemmbalken 6, 27 mit einem vordefinierten Druck die Glasplatte 14 auf die Bearbeitungstischoberfläche 7 pressen. Anschließend fahren die Schneidbrecheinrichtung 10 sowie die Schneideinheit 16 mit ihren Schneidköpfen 12, 18 entlang einer geplanten Schnittlinie auf der Glastafel 14 entlang und erzeugen die entsprechende Anritzung. Anschließend fährt die Schneidbrecheinrichtung 10 mit der Brechrolle 13 die Ritzlinie entlang und anschließend wird die Brechleiste 19 auf die untere Ritzlinie geschwenkt, auf die sie mit ihrer Brechkante 20 auftrifft und dabei die Glasplatte leicht anhebt, wodurch die obere Ritzlinie gebrochen wird. Beim Brechen der Ritzlinien werden die Klemmbalken gelockert oder angehoben, um eine Bewegung der Glasplatte 14 zuzulassen. Anschließend wird die Glasplatte wieder mit den Klemmbalken auf die Tischoberfläche 7 gedrückt bzw. gepreßt und der Heizstrahler 35 in den Bereich der Ritzlinien eingeschwenkt, wo er die Glasplatte 14 erhitzt. Hierdurch wird die Verbundglasfolie plastifiziert. Um die Trennung der Glasscheibenteile in diesem Bereich zu erzielen, wird anschließend das verschiebliche Tischsegment 25 von der Schnittlinie wegbewegt, so daß entlang der Ritzlinien die Glasscheibenteile auseinander gezogen werden. Hierzu ist der Klemmbalken 6 der Schneidbrücke 3 in Glasförderrichtung G um ein gewünschtes Stück verschieblich ausgebildet.

Bei einer weiteren Ausführungsform der Erfindung wird die Glasplatte zum Schneiden nicht geklemmt, sondern zunächst oberseitig und/oder unterseitig geschnitten, wobei mit einem Wegaufnehmer die Schnittlänge und damit die Breite der Glasplatte erfaßt wird. Nachdem die Breite der Glasplatte derart erfaßt wurde, werden zum anschließenden Klemmen der Glasplatte die entsprechenden Kolbenzylindereinheiten aktiviert.

Ferner ist es möglich, die Klemmbalken vor dem Schneiden solange auf die Glasplatte abzusenken, bis sie diese berühren und anschließend das Schneiden zu beginnen, wobei die Kolbenzylindereinheiten nacheinander entsprechend des eben zurückgelegten Weges des Wegaufnehmers bzw. des Schneidrades aktiviert werden.

Bei der erfindungsgemäßen Vorrichtung bzw. dem erfindungsgemäßen Verfahren ist von Vorteil, daß der oder die Klemmbalken nur dort, wo eine Glasscheibe auf dem Bearbeitungstisch liegt, mit Kraft durch die Kolbenzylindereinheiten beaufschlagt wird bzw. werden, so daß ein Herunterbiegen des Klemmbalkens über eine Glaskante hinaus und damit das Brechen der Glaskante verhindert wird.

## Patentansprüche

1. Verfahren zum Aufteilen von Verbundglasscheiben insbesondere beim Schneiden und Brechen, wobei die Verbundglasscheibe während eines oder mehrerer Bearbeitungsschritte mit Klemmbalken auf einem Bearbeitungstisch klemmend gehalten wird,
**dadurch gekennzeichnet, daß**
beim Aufteilen von Verbundglasscheiben geringerer Breite als der Klemmbalkenlänge in die Klemmbalken (6, 27) nur im Bereich der Verbundglasscheibe (14) eine Klemmkraft eingeleitet wird.

2. Verfahren nach Anspruch 1,
**dadurch gekennzeichnet, daß**
die Klemmbalken (6, 27) über eine Mehrzahl von über die Klemmbalkenlänge verteilt angeordneten Betätigungseinrichtungen (8, 28) mit der Klemmkraft beaufschlagt werden, wobei nur die Betätigungseinrichtungen (8, 28) eine Kraft aufbringen, in deren Bereich eine Scheibe (14) angeordnet ist.

3. Verfahren nach Anspruch 1 oder 2,
**dadurch gekennzeichnet, daß**
die zu klemmende Scheibenbreite mit optischen, mechanischen oder anderen geeigneten Sensoren (9) erfaßt wird.

4. Verfahren nach einem der vorhergehenden Ansprüche,
**dadurch gekennzeichnet, daß**
die Scheibenbreite mit Weggebern vor dem Ritzen durch Überfahren der Scheibe (14) oder während des Ritzens erfaßt wird und anschließend das Klemmen über die ermittelte Weglänge erfolgt.

5. Verfahren nach einem der vorhergehenden Ansprüche,
**dadurch gekennzeichnet, daß**
die Klemmbalken (6, 27) mittels Kolbenzylindereinheiten (8, 28) betätigt werden, wobei die Kolbenzylindereinheiten (8, 28) pneumatisch, hydraulisch oder elektromagnetisch betätigt werden.

6. Vorrichtung zum Schneiden und Brechen von Verbundglasscheiben bzw. -platten, insbesondere zum Durchführen des Verfahrens nach einem der vorhergehenden Ansprüche, wobei Klemmbalken (6, 27) vorhanden sind, mit denen eine zu bearbeitende Verbundglasscheibe bzw. -tafel (14) während eines oder mehrerer Bearbeitungsschritte zwischen den Klemmbalken (6, 27) und einem Bearbeitungstisch (2) klemmend gehalten wird,
**dadurch gekennzeichnet, daß**
die Klemmbalken (6, 27) an je einer Brücke (3, 4) angeordnet sind, wobei zwischen Klemmbalken (6, 27) und Brücken (3, 4) je eine Mehrzahl von zueinander beabstandeten Klemmbalkenbetätigungseinrichtungen (8, 28) vorhanden sind und wobei Steuerungsmittel (9) für die Klemmbalkenbetätigungseinrichtungen (8, 28) vorhanden sind, so daß nur die Klemmbalkenbetätigungsmittel (8, 28) betätigbar sind, in deren Bereich eine zu klemmende Verbundglastafel (14) zwischen Klemmbalken (6, 27) und Bearbeitungstisch (2) aufliegt.

7. Vorrichtung nach Anspruch 6,
**dadurch gekennzeichnet, daß**
die Klemmbalkenbetätigungsmittel (8, 28) Kolbenzylindereinheiten (8, 28) sind.

8. Vorrichtung nach Anspruch 6 oder 7,
**dadurch gekennzeichnet, daß**
die Steuerungsmittel (9) optische, mechanische oder andere geeignete Sensoren sind.

9. Vorrichtung nach Anspruch 6 oder 7,
**dadurch gekennzeichnet, daß**
die Steuerungsmittel (9) Weggeber sind.

10. Vorrichtung nach einem der Ansprüche 6 bis 9,
**dadurch gekennzeichnet, daß**
der Weggeber an einer Schneideinrichtung (10, 16) gekoppelt bzw. angeordnet ist, so daß beim Schneiden die Breite der Tafel (14) ermittelt wird.

11. Vorrichtung nach einem der Ansprüche 6 bis 10,
**dadurch gekennzeichnet, daß**
ein Weggeber und ein optischer oder mechanischer Sensor (9) miteinander gekoppelt an den Brücken (3, 4, 15) angeordnet sind, so daß die Breite und Lage der Tafel durch Überfahren des Bearbeitungstisches (2) ermittelt wird.

12. Vorrichtung nach einem der Ansprüche 6 bis 11,
**dadurch gekennzeichnet, daß**
jeder Klemmbalkenbetätigungseinrichtung (8, 28) ein eigenes Steuerungsmittel (9) zugeordnet ist.

13. Vorrichtung nach einem der Ansprüche 6 bis 12,
**dadurch gekennzeichnet, daß**
eine Klemmbalkenbetätigungseinrichtung (8, 28) und ein zugehöriges Steuerungsmittel (9) bezüglich der Brückenspannweite nebeneinander auf einer Höhe angeordnet sind.

14. Vorrichtung nach einem der Ansprüche 6 bis 13,
**dadurch gekennzeichnet, daß**
für die Klemmbalkenbetätigungseinrichtungen (8, 28) aller Brücken (3, 4, 15) Steuerungsmittel (9) nur an einer Brücke vorhanden sind.
